# EUROPEAN PATENT SPECIFICATION

(11) **EP 2 908 250 B1**
(45) Date of publication and mention of the grant of the patent: **29.03.2017**
(21) Application number: 14155406.3
(22) Date of filing: 17.02.2014
(51) Int. Cl.: G06F 13/40

(54) **Interface unit for connecting a printing engine to a peripheral device**
Schnittstelleneinheit zum Verbinden eines Druckmoduls mit einer peripheren Vorrichtung
Unité d'interface destinée à relier un moteur d'impression à un dispositif périphérique

(43) Date of publication of application: 19.08.2015
(73) Proprietor: Ricoh Company, Ltd., Tokyo 104-8222 (JP)
(72) Inventor: Russell, Stewart, London, (GB); Fukuda, Yoshio, London, (GB)
(74) Representative: Maury, Richard Philip

(56) References cited:
- US-A1- 2006 023 245
- US-A1- 2009 087 242
- US-A1- 2011 246 678

## Description

### FIELD

Embodiments described herein relate generally to an interface unit for connecting a printing engine to a peripheral device.

### BACKGROUND

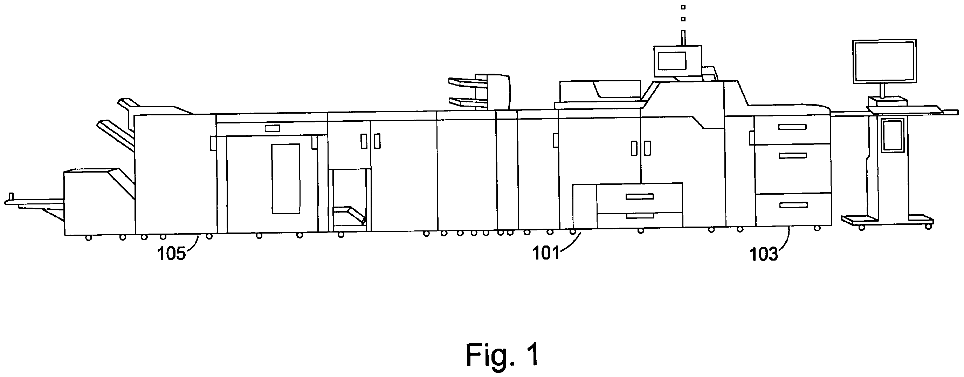

Printing systems for producing different types of printed media are known in the art. Figure 1 shows an example of a conventional printing system. The system comprises a printing engine 101 that includes the printing heads and ink / toner used to apply a particular design or typeface to the media. The printing engine 101 may itself be part of a larger, multi-function device that provides additional facilities besides printing, such as scanning and photocopying documents, for example.

In addition to the printing engine 101, the printing system includes a first peripheral device 103 that is used to store media to be printed on and which is configured to feed the media to the printing engine 101 when a print job is requested by a user. The first peripheral device 103 may house a variety of printable media, including different types of paper, acetate, cardboard, etc. A second peripheral device 105 is located on the other side of the printing engine and is used to provide finishing features, which may include, for example, stapling, collating, hole punching, binding or folding of documents output by the printing engine.

The printing system will typically be connected to a user's work-station, either by a direct wired link, or by a network connection, such that the user can send print requests to the printing system from that work-station. In addition to specifying the data to be printed, the print request may include a number of parameters, such as the type of media to be printed on, the number of copies required, whether or not it is desired to print on both sides of the media, and any finishing features such as stapling or folding that are required.

In order to process a print request correctly, the printing engine 101 must communicate effectively with both the first and second peripheral devices 103, 105. In particular, it will be necessary to coordinate the timing of each device, such that the printable media is delivered to the printing engine 101 in readiness for the printing heads to operate, whilst the second peripheral device 105 must in turn time its actions with the receipt of the printed media from the printing engine 101. Thus, throughout the course of the printing process, the printing engine 101 and the peripheral devices 103, 105 will need to exchange various control and / or timing signals in order to ensure that the printing process runs smoothly to completion. These timing / control signals will typically be exchanged via one or more electrical connecting members, such as the pins of a serial or parallel connector lead.

In some systems such as the one shown in Figure 1, the printing engine 101 and the first and second peripherals 103, 105 may all be supplied by the same manufacturer. In such cases, the devices will be readily compatible with one another; that is, the devices will each use the same protocol for communicating with one another. However, it is not uncommon for users to have specific printing requirements that cannot be met using parts supplied entirely by one manufacturer. A user may, for example, be in possession of a printing engine supplied by a first manufacturer, but have specific feeding / finishing requirements that can only be met by using a peripheral device supplied by a different manufacturer. In such cases, the printing engine and the peripheral device may not be readily compatible with another, as they may function by using different protocols, for example. In order to connect the two, a user must build a customised interface that will interpret the signals being received from the peripheral device and translate them into a format that can be recognised by the printing engine (and vice versa). Doing so can become burdensome in the event that the user wishes to connect more than one peripheral device to the printing engine as each will require its own customised interface to be built.

US2006023245 proposes an image forming apparatus that is capable of bringing processing devices, such as sheet feed devices and post-processing devices connected respectively to the image forming apparatus, into operable states in timing optimal for carrying out an image forming job. A print job is analyzed to determine at least one sheet feed device and at least one post-processing device to be used in executing the print job, and states of the determined devices are checked to determine at least one of the sheet feed device and the post-processing device to be caused to start a preparatory operation in advance before the print job is executed. Power supply to the at least one of the sheet feed device and the post-processing device is turned on in timing such that the preparatory operation is completed in time for the start of execution of the print job.

US2011246678 proposes a method for automatic mapping and updating of computer switching devices, wherein the computer switching device is electrically connected with a plurality of peripheral devices and computers via a USB host MCU and a plurality of USB device MCUs that are connected. For non-standard USB devices or USB standard enumeration and parsing unable to be processed by built-in firmware, the USB host MCU transfers special requirements to a computer, receive and convert feedbacks, and transmit them to external peripheral devices to perform enumeration and connection processes and store them in the USB host MCU. For special communication requirements of computers, the USB device MCU performs a reverse process, and decides to map and update automatically to connect USB peripheral devices with computers successfully.

### SUMMARY

According to a first embodiment, there is provided an interface unit for connecting a printing engine to a peripheral device, the interface unit comprising:
a port for receiving a connector having a plurality of electrical connecting members used to transmit signals from a first one of the printing engine and the peripheral device to the other of the printing engine and the peripheral device; and
a mapping engine for mapping voltage signals received at respective ones of the electrical connecting members to predetermined message frames, wherein a message frame comprises a sequence of bits that conveys information concerning the status or actions of the first one of the printing engine and the peripheral device;
the interface unit being configured to use each message frame to output a corresponding signal to other of the printing engine and the peripheral device.

An interface unit according to an embodiment described herein provides greater flexibility in connecting printing engines with different peripheral devices. In particular, the interface unit can help to reduce the workload in connecting printing engines with peripheral devices supplied by different manufacturers. The message frames comprise a data format that can be readily translated into different types of output message, such as serial commands, for example, which can be easily interpreted by other devices connected to the interface unit. When connecting a particular peripheral device to a printing engine, therefore, it is not necessary to build an entire customised interface from scratch; instead, a user need only determine which of the electrical connecting members in the peripheral device's standard connector dictate the different functions of that device and adjust the mapping between the voltage signals applied to those electrical connecting members and the predetermined message frames in the interface unit accordingly.

In some embodiments, the connecting members are pin members. For example, the connector may be a conventional parallel connector having a plurality of pins. However, it will be appreciated that the interface unit may work with other types of connector, having different shapes of electrical connecting members.

In some embodiments, the interface unit is configured to use each message frame to generate a corresponding serial command and transmit the serial command to the other of the printing engine and the peripheral device.

In some embodiments, the mapping engine is further configured to map data commands received from the first one of the printing engine and the peripheral device to voltage signals and to apply the voltage signals to the respective electrical connecting members for output to the other of the printing engine and the peripheral device.

In some embodiments, each predetermined message frame is associated with a change in voltage at a respective electrical connecting member.

In some embodiments, the sequence of bits in a message frame encodes one or more timing parameters.

In some embodiments, the mapping between the predetermined message frames and the respective electrical connecting members is stored in a configuration file. The interface unit may be configured to access the configuration file to determine a message frame to be generated on detecting a voltage signal at a respective electrical connecting member.

In some embodiments, the interface unit is configured to generate one of the predetermined message frames on detecting the rising and / or falling edge of a voltage signal at a respective electrical connecting member.

In some embodiments, on detecting the rising edge of a voltage signal at a respective electrical connecting member, the interface unit is configured to generate a first message frame and on detecting the falling edge of the voltage signal, the interface unit is configured to generate a second message frame.

In some embodiments, the interface unit is configured to perform a step of debouncing a voltage signal detected at a respective electrical connecting member, before determining whether to map the voltage signal to one of the predetermined message frames.

In some embodiments, the interface unit comprises a message queue for queuing message frames generated by the unit, wherein the message frames are stored in the queue in the order in which they are generated.

In some embodiments, the peripheral device is configured to perform one or more of: stapling, binding, punching and folding printed media. Alternatively, or in addition, the peripheral device may be configured to feed media for printing on into the printing engine.

According to a second embodiment, there is provided a system comprising an interface unit according to the first embodiment and a printing engine or a peripheral device.

According to a third embodiment, there is provided a method for interfacing a printing engine to a peripheral device, the method comprising:
detecting voltage signals at respective electrical connecting members of a connector used to transmit signals from a first one of the printing engine and the peripheral device to the other of the printing engine and the peripheral device;
mapping the voltage signals received at the respective electrical connecting members to predetermined message frames, wherein a message frame comprises a sequence of bits that conveys information concerning the status or actions of the first one of the printing engine and the peripheral device; and
using each message frame to output a corresponding signal to other of the printing engine and the peripheral device..

According to a fourth embodiment, there is provided a computer readable storage medium comprising computer executable instructions that when executed by a computer will cause the computer to carry out the method of the third embodiment.

### BRIEF DESCRIPTION OF FIGURES

Embodiments of the invention will now be described by way of example with reference to the accompanying drawings in which:
Figure 1 shows an example of a conventional printing system;
Figure 2 shows an example of a printing system having an interface unit according to an embodiment described herein;
Figure 3 shows an example of a printing system having an interface unit according to an embodiment described herein;
Figure 4 shows an example of a printing system having an interface unit according to an embodiment described herein;
Figure 5 shows an example of an interface unit according to an embodiment described herein;
Figure 6 shows a schematic of the internal components of the interface unit of Figure 5;
Figure 7 shows the parallel port of an interface unit according to an embodiment described herein;
Figure 8 shows the electrical configuration of the individual input and output pins of the parallel port of Figure 7;
Figure 9 shows a schematic of a software hierarchy implemented in an interface unit according to an embodiment described herein;
Figure 10 shows the format of an Accessory Connectivity Interface (ACI) message frame generated by the interface unit;
Figure 11 shows an example of an ACI message frame used to communicate line speed from a finishing device to a printing engine;
Figure 12 shows the format of an Inter-Process Communication IPC message used to convey an ACI message frame between components of the software hierarchy of the interface unit;
Figure 13 shows an example of an IPC message used to transmit a timing signal;
Figure 14 shows an example of an IPC message in which a 'Line Speed' ACI message has been embedded;
Figure 15 shows an overview of the processing carried out within an interface unit, according to an embodiment described herein;
Figure 16 shows an example of how a voltage signal received at a pin of the parallel port of the interface unit is mapped to an ACI message frame, according to an embodiment described herein;
Figure 17 shows a flow-chart summarising the steps used to map the voltage signal received at the pin in Figure 16 to an appropriate ACI message frame;
Figure 18 shows an example of how a voltage signal received at a pin of the parallel port of the interface unit is mapped to an ACI message frame, according to an embodiment described herein;
Figure 19 shows an example of how two ACI message frames may be mapped to output voltage signals at the same pin of the parallel port of the interface unit, according to an embodiment described herein; and
Figure 20 shows an example of how a voltage signal received at a pin of the parallel port of the interface unit is mapped to an ACI message frame, according to an embodiment described herein.

### DETAILED DESCRIPTION

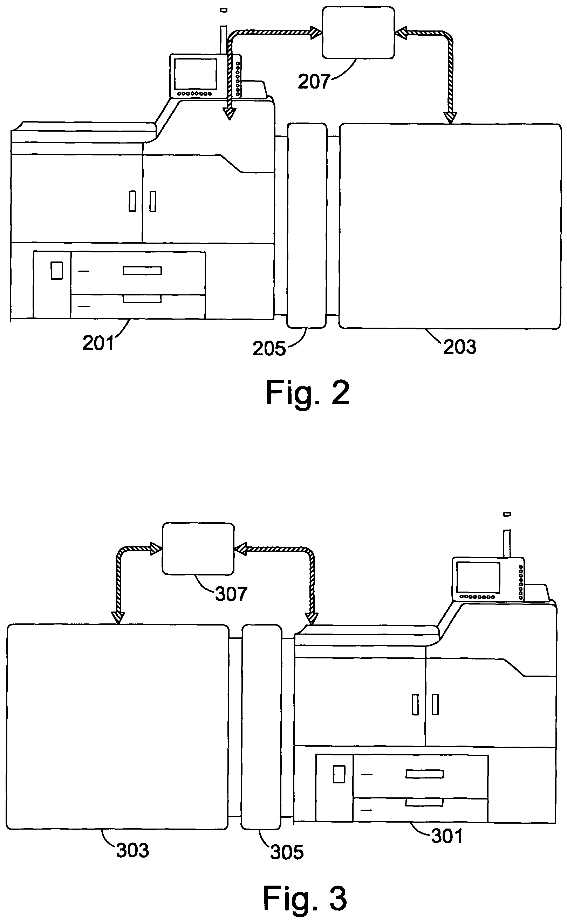

Figure 2 shows an example of a printing system having an interface unit 207 according to an embodiment of the present invention. In Figure 2, the printing system includes a printing engine 201 and a first peripheral device 203, which in this example is a paper feeder (alternatively, or in addition, the first peripheral device may be configured to prepare media for printing by e.g. cutting the media to a required size, or rotating the media). The printing engine 201 and the paper feeder 203 are provided by different manufacturers. An (optional) buffer unit 205 is situated between the printing engine and the paper feeder and is used to compensate for differences in e.g. height between the output of the feeder 203 and the input of the printing engine 201.

As can be seen in Figure 2, an interface unit 207 is connected between the paper feeder 203 and the printing engine 201. The interface unit 207 allows the two devices to communicate effectively with one another during the course of a printing job. From the perspective of the printing engine 201, the interface unit serves as the front end of the peripheral device 203 and in so doing serves to emulate a peripheral device having the same manufacturer as the printing engine 201.

Figure 3 shows another embodiment in which the printing system includes a printing engine 301 and a finishing device 303, which are able to communicate with one another via an interface unit 307, in a similar way to the printing engine and feeder unit shown in Figure 2. As before, an optional buffer unit 305 is situated between the printing engine 301 and the finishing device 303 and is used to compensate for differences in e.g. height between the output of the finishing device 305 and the output of the printing engine 301.

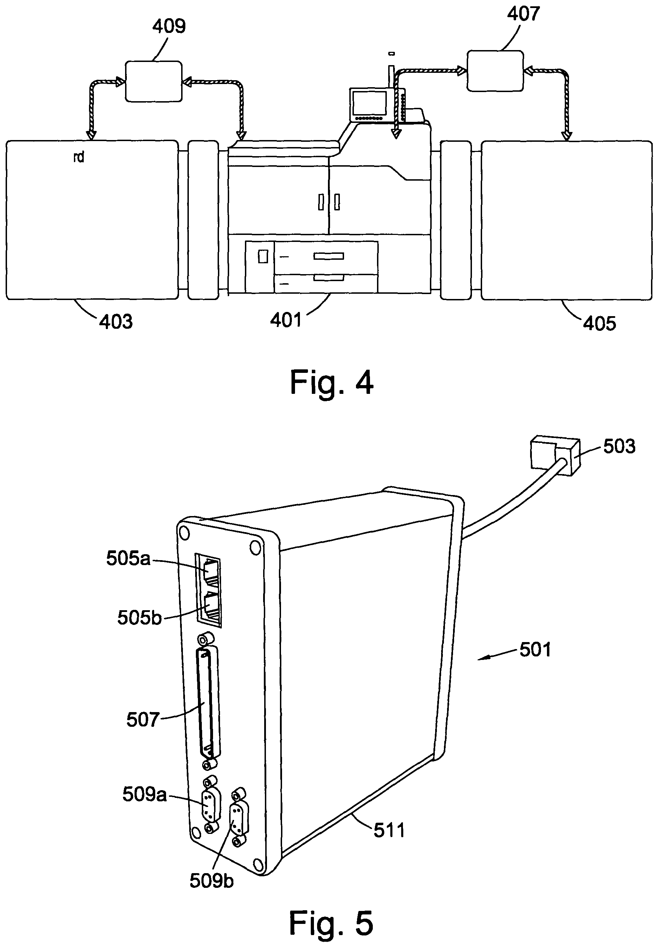

Figure 4 shows another embodiment in which the printing system includes a printing engine 401, a finishing device 403 and a feeder device 405. Both the finishing device 403 and the feeder device 405 are supplied by different manufacturer(s) from the printing engine 401. In the system of Figure 4, separate respective interface units 407, 409 are provided for connecting the feeder device 405 to the printing engine 401 and for connecting the finishing device 403 to the printing engine 401. However, it is conceivable that a single interface unit may be used for connecting the two peripheral devices to the printing engine.

Figure 5 shows an example of an interface unit 501 according to an embodiment. The unit includes a printing port for connecting the unit to a printing engine using an appropriate connector 503. In the present example, the printing port is configured for use with a DC Power/Serial TTL connector with a data transfer rate of 9600-38,400bps. The unit also includes 2 Control Area Network [CAN] ports 505a, 505b, a parallel connector port 507 and 2 RS-232 serial ports 509a, 509b, each of which can be used to connect the unit to a peripheral device using an appropriate connector. The CAN ports 505a, 505b can achieve connection speeds from 125kbs to 1 Mbs, whilst the 2 RS232 serial ports 509a, 509b typically have baud rates ranging from between 9,600bps to 115,200ps. The various components of the unit are housed within a rugged anodised aluminium casing 511.

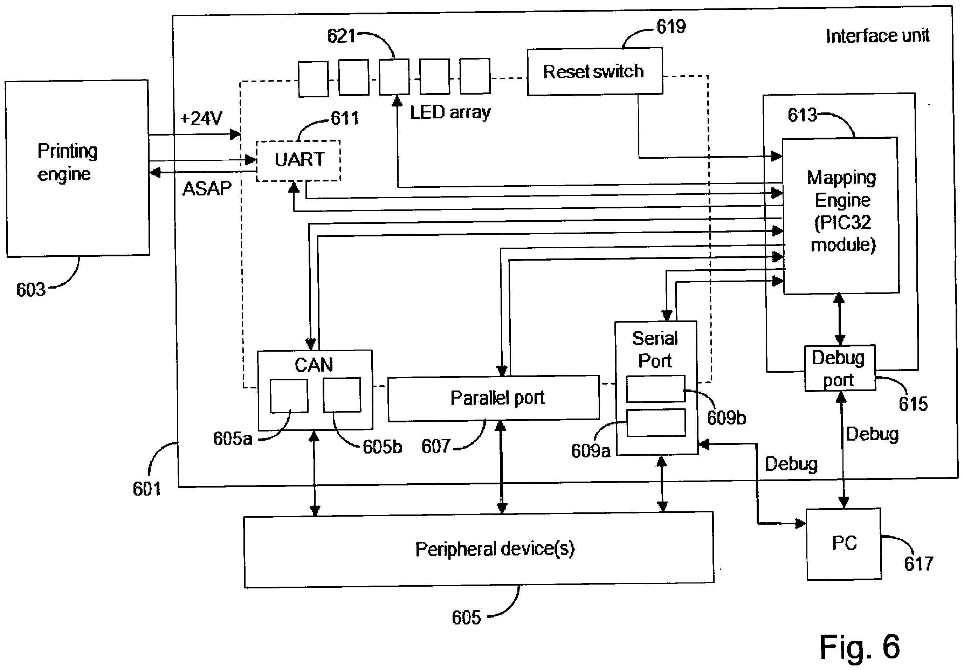

Figure 6 shows a schematic of the internal components of an interface unit according to an embodiment. As discussed in relation to Figure 5, the interface unit 601 includes 2 CAN interface ports 605a, 605b, a parallel connector port 607 and 2 RS232 serial ports 609a, 609b for connecting the unit to peripheral devices 605, such as a paper feeder or finishing device. The interface unit 601 also includes a printing port for connecting the interface unit to a printing engine 603 via a serial connector. In the present embodiment, data is sent to and from the printing engine via a proprietary protocol. The interface unit includes a Universal Asynchronous Receiver / Transmitter (UART) 611 that is used to translate data between parallel and serial forms.

Also shown in Figure 6 is a processor module (PIC32) 613 that mediates the exchange of signals between the printing engine 603 and the peripheral device(s). The PIC32 module 613 functions as a mapping engine that serves to map signals received from one or other of the printing engine 603 and peripheral device(s) 605 to a format that can be readily interpreted by the other of the printing engine 603 and peripheral device(s) 605. In the present example, the PIC32 module 613 functions to map voltage signals received from the peripheral device 605 at the individual pins of the parallel connector 607 to predetermined message frames, which can then be translated into serial commands for use by the printing engine 603. The translation of the message frames into serial commands may be carried out within the interface unit itself, or depending on the printing engine, the interface unit may output the message frames directly to the printing engine, with the printing engine then providing its own translation into serial commands. The mapping engine 613 may also perform the reverse function of mapping serial commands received from the printing engine 603 to voltages that can be applied to the pins of the parallel interface 607 used to communicate with the peripheral device 605.

Also shown in Figure 6 is an (optional) Debug port 615 for connecting the interface unit to an external personal computer or workstation 617 in order to amend or supplement the code implemented in the PIC module 613. (It is also possible to alter the code by connecting via one of the serial ports 609a, 609b). A reset switch 619 is also provided; in the present embodiment, the switch 619 is software definable and can be used for a number of different functions, for example, to reset to a known state after a paper jam, or to pause printing.

The mapping engine 613 can facilitate easier integration of peripherals / printing engines manufactured by different parties to form a complete, controlled in-line system. The interface unit can also act as a 'pass through data modifier' which permits peripherals to be used across different model ranges (for example, to interface an older printing engine with a more modern peripheral device, whether from the same manufacturer or another manufacturer). The interface unit 601 can be seen to serve as a universal platform providing several connectivity options and also extended software modes. Software modes can be specifically configured to support almost any peripheral. Specific control signals can be defined and mapped to any one of the physical hardware ports.

In addition to facilitating exchange of signals between the printing engine and the peripheral device(s), the PIC32 module is able to provide visual alerts to the user concerning the status of the printing engine and / or peripheral device(s), for example by illuminating one or more lights, such as LEDS 621. The PIC32 module may receive a signal from one or other of the devices that signifies a particular event has occurred, which a user should be made aware of. As one example, the PIC32 may cause one of the LEDs 621 to become illuminated in the event that one or other of the devices reports a paper jam.

An example of the way in which the interface unit is configured to handle incoming signals will now be described with reference to one of the parallel ports of the unit. As is well known, a parallel port is one designed to receive a parallel connector that comprises a plurality of electrical connecting members in the form of pins, through which information signals can be transmitted to and from a particular device.

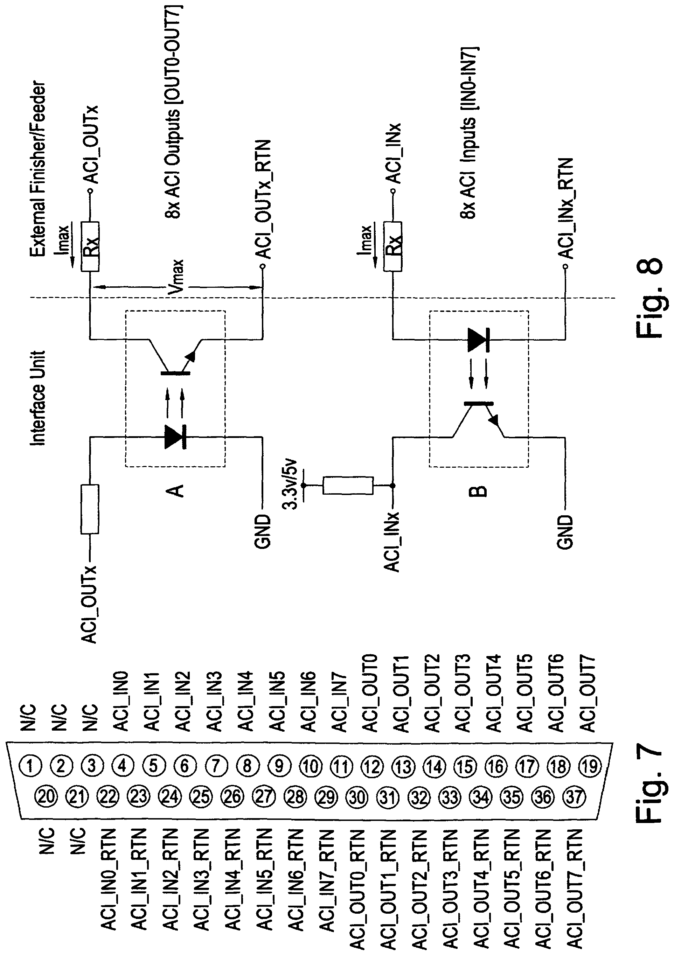

The parallel port of the interface unit is shown in more detail in Figure 7 and comprises 8 opto-isolated input pins and 8 opto-isolated output pins (other numbers of pins are also possible). The configuration of the individual input and output pins is shown in the lower and upper circuit diagrams in Figure 8, respectively. The interface unit provides increased flexibility by allowing the different I/O signal pins to adopt any function to support a peripheral device attached to the printing engine. As will be explained below, this is performed by applying commands and / or parameters to each signal pin based on settings in a configuration file.

In more detail, the interface unit is configured with a number of virtual inputs, where a virtual input is encoded as a message that specifies information about the status of the peripheral device, or defines an action to be executed by the printing engine. Signals at any one of the 8 physical input pins can be mapped to a respective one of the virtual inputs (as above, the number 8 is given as an example only; the number of pins / virtual inputs may be much higher, depending on the number of functions used by the interface unit). In one example, a voltage detected at one of the input pins may be mapped to a message frame that will be understood by the printing engine to mean that the peripheral device is online. As another example, a voltage detected at a respective one of the input pins of the parallel port may be mapped to a message frame that will be understood as a request for the printing engine to feed sheets of paper through to the peripheral device.

Each one of the predetermined message frames comprises a sequence of bits, where the different bits in the sequence may have different roles. For example, one or more bits may be used to identify the peripheral device from which the signal is being transmitted, as well as the actual data or command being issued. As a further example, one or more bits may be used to encode timing information; for example, a particular group of bits may specify a timing parameter that dictates whether or not the printing engine should wait a certain amount of time before executing a particular action.

When operated in reverse (i.e. when receiving commands in e.g. serial format from the printing engine for conveying to the peripheral device), the interface unit provides a number of virtual outputs, where a virtual output defines an action to be executed by the peripheral device (for example, load / receive paper, fold paper, staple paper, etc). In a typical embodiment, up to 8 virtual outputs may be mapped to 8 respective physical output pins. In some embodiments, multiple virtual inputs or outputs may be mapped to the signals at a respective input or output pin by mapping different signals to the leading and trailing edges of a signal at the pin in question. As before, the mapping between the pins and the respective signals is managed using a configuration file.

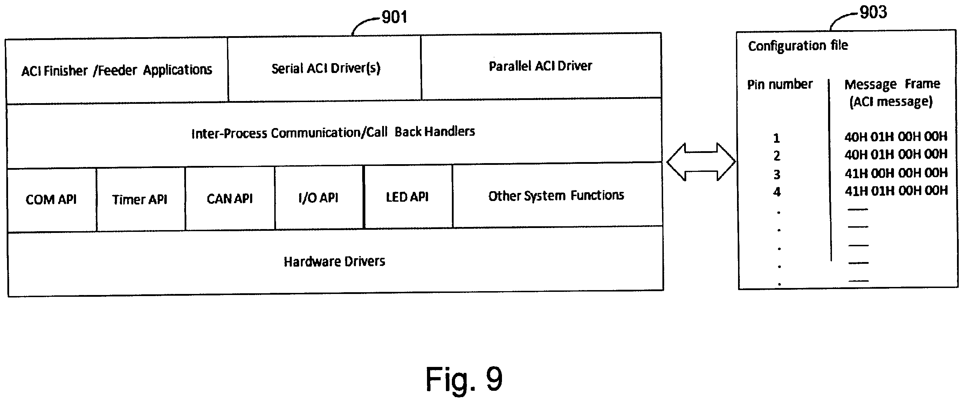

Figure 9 shows a schematic of a software hierarchy 901 implemented in the mapping engine of the interface unit according to an embodiment, which can be used to map the voltage signals at the parallel interface to message frames and vice versa. At the base of the hierarchy are hardware drivers for the different devices that are to be connected (i.e. the printing engine and one or more peripheral devices). The next layer in the hierarchy comprises a number of application programming interfaces (APIs) including a COM API, Timer API, CAN API, I/O API (parallel port API) and LED API, as well as other system APIs. Above the APIs are located Inter-Process Communication / Call back handlers. The uppermost layer includes the peripheral applications (finisher / feeder or a combination of both), and drivers for the serial and parallel ports.

When a voltage is detected at a respective pin of the parallel port, the I/O (parallel port) API functions to map the signal into a message frame, by referring to a look-up table saved in a configuration file 903. The message frame takes the form of an Accessory Connectivity Interface (ACI) event (discussed in more detail below) and is forwarded to the relevant application or driver by embedding in a larger Inter-Process Communication (IPC) message. As an example, a voltage detected at a respective pin in the parallel port may be mapped to one of the message frames stored in the configuration file; the message frame will then be forwarded within an IPC message to the serial ACI driver for output to the printing engine. In a similar fashion, when sending data / commands in the opposite direction from the printing engine to the peripheral device, an input signal received from the printing engine will be translated to an ACI message and communicated within an IPC message to the I/O (parallel) API / parallel port driver. The interface unit will in turn apply a voltage at the relevant pin of e.g. the parallel port, by consulting the configuration file and determining the pin associated with the message frame in the ACI message in question.

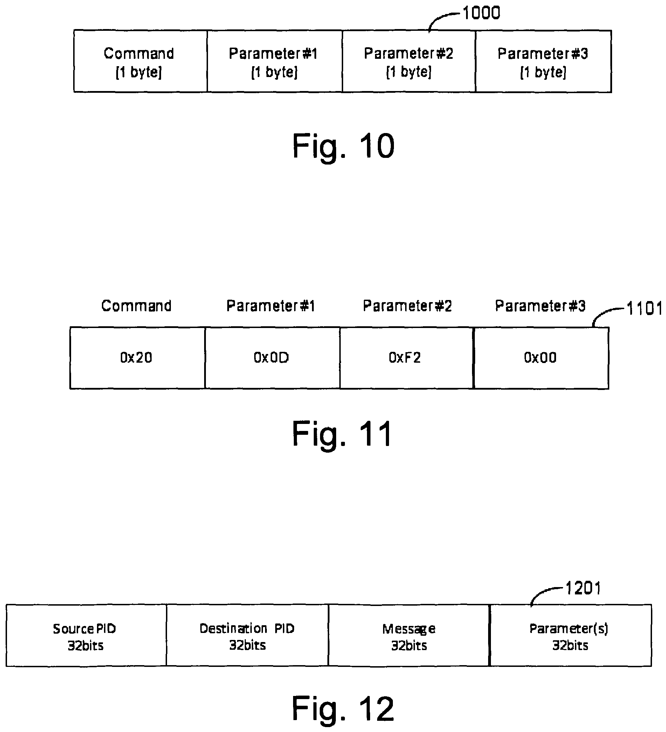

Figure 10 shows the format of a typical ACI message 1000 stored in the configuration file of Figure 9. As discussed above, the ACI message comprises a format that can be readily translated into e.g. a serial command by the interface unit or a connected device. The ACI message 1000 consists of a 32-bit word that is made up of a command of 1 byte and up to 3 parameters, each of which is 1 byte in length. Figure 11 shows an example of an ACI message 1101 for communicating line speed from a finishing device to a printing engine. In the example shown in Figure 11, the command byte is 20H and uses 2 parameters, line speed MSB and LSB [0DH and F2H]. The third parameter is unused and is set at 0. The line speed is calculated by concatenating the line speed MSB and LSB, 0DH and F2H = 0DF2H.

As described above, ACI messages are embedded in IPC messages for sending between the various components in the software hierarchy of Figure 9. The format of an IPC message is shown in Figure 12; the IPC message 1201 is 16 bytes in size, for example, and includes 4 components, each of which comprises 32 bits: as source PID, a destination PID, a message and one or more parameters.

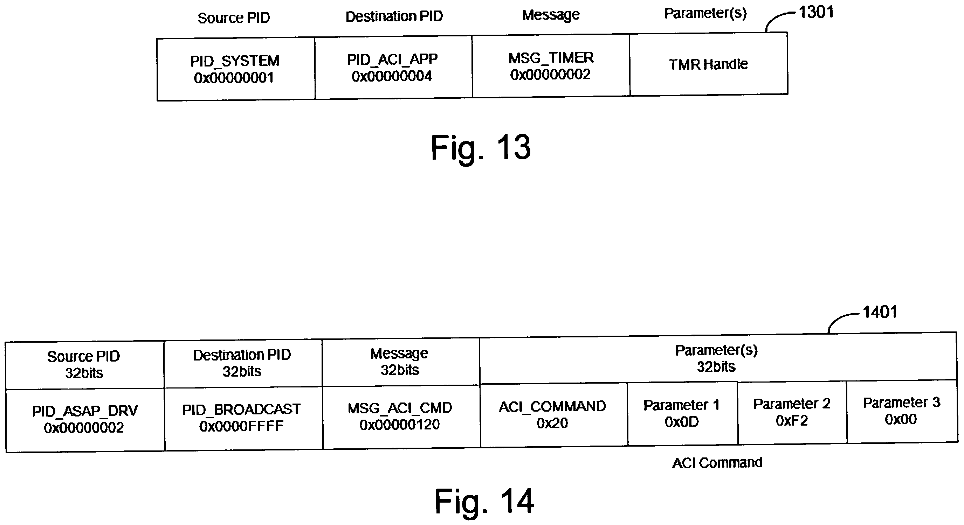

Figure 13 shows an example of an IPC message 1301 that is used to transmit a timing signal. In this example, the message is being directed from the system's timer API (source) to the ACI application in the upper layer of the software hierarchy. The "Message" component of the IPC message 1301 identifies the nature of the information being sent, whilst the last of the 4 components of the IPC message comprises the embedded ACI message (TMR Handle) which is used to specify a particular period as having expired (for example, the peripheral device's warm up period).

Figure 14 shows an example of an IPC message 1401 with a 'Line Speed' ACI message embedded. The IPC message is being broadcast to all processes in the upper layer of the software hierarchy, as indicated by the destination "PID_BROADCAST". In the example shown in Figure 14, the 4 components of the ACI message are shown in full as being embedded within the 32 bit Parameter component of the IPC message.

Referring back to the software hierarchy of Figure 9, it will be appreciated that the various other APIs (COM API, CAN API) can generate ACI messages for data and commands received through a serial port(s) of the interface unit. The data received through the serial port(s) can be abstracted to the same ACI message format as discussed above, and sent as part of larger IPC messages to the relevant application or process. By abstracting signals received through different ports of the interface unit to a common intermediary (ACI) message format, it becomes easier to connect a variety of peripheral devices to the printing engine. For example, any third party feeder or finisher driver can respond to or generate ACI events allowing connection of a wide range or devices.

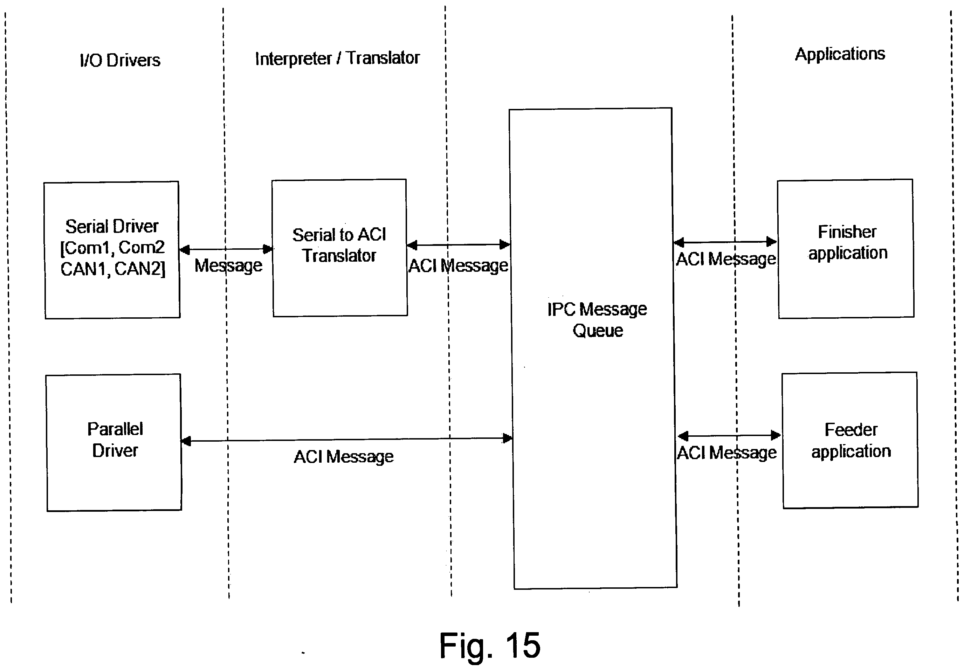

Figure 15 shows an overview of the processing carried out within the interface unit. As shown, signals from each one of the serial ports / parallel ports are abstracted into ACI messages within the software of the interface unit. Since signals from both the serial and parallel ports evolve into ACI message frames, only one mechanism is required to handle I/O from any source [Serial, Parallel, Can etc]. The ACI messages, which are embedded in IPC messages, are serialised as they enter a message queue [first in / first out] meaning that all events are dealt with in the order they occur, regardless of where they originated from. An advantage of this is that all events are dealt with outside of interrupt routines, meaning minimal time is spent in IRQ handlers, making the system more responsive and less likely to miss events.

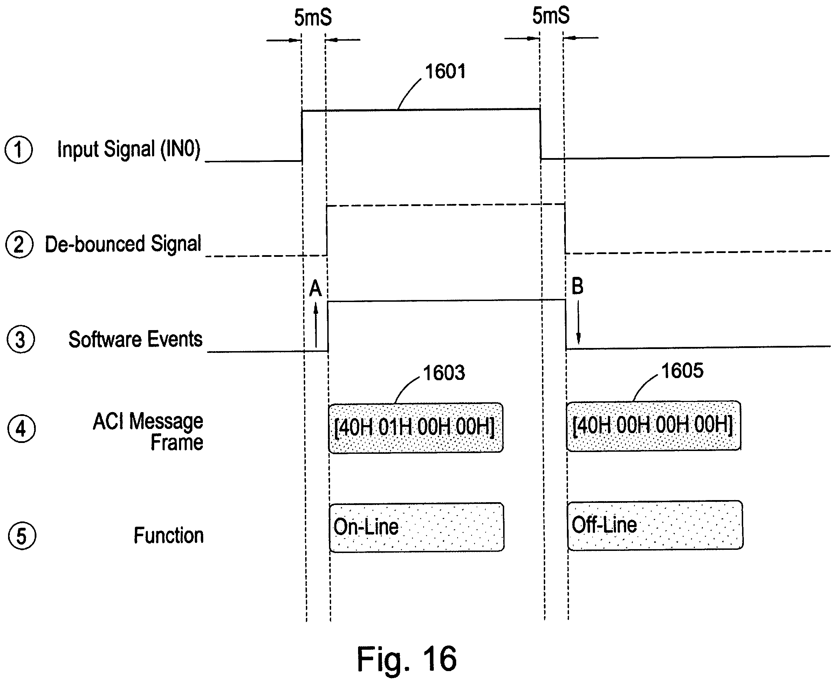

As discussed above, the interface unit is configured to generate an ACI message upon detecting a voltage signal at a respective pin of a parallel connector, for example. In some embodiments, both the rising edge and falling edge of a voltage signal may have separate ACI message frames associated with them i.e. the configuration file may assign two different ACI message frames to an individual pin, with one of the ACI message frames being selected in the event that the voltage at the pin is seen to increase and the other being selected in the event that the voltage at the pin is seen to decrease. An example is shown in figure 16. Here, the voltage 1601 that is applied to the pin is seen to increase from an initial low state to a higher level, where it remains for a finite period before falling back to the original lower level. Following de-bouncing of the signal, the rising and falling edges of the voltage signal are mapped by the interface unit to two different ACI message frames 1603, 1605. In the present example, the first of these two ACI message frames is used to communicate that the peripheral device is "On-Line", whilst the second is used to communicate that the peripheral device is "Off-Line".

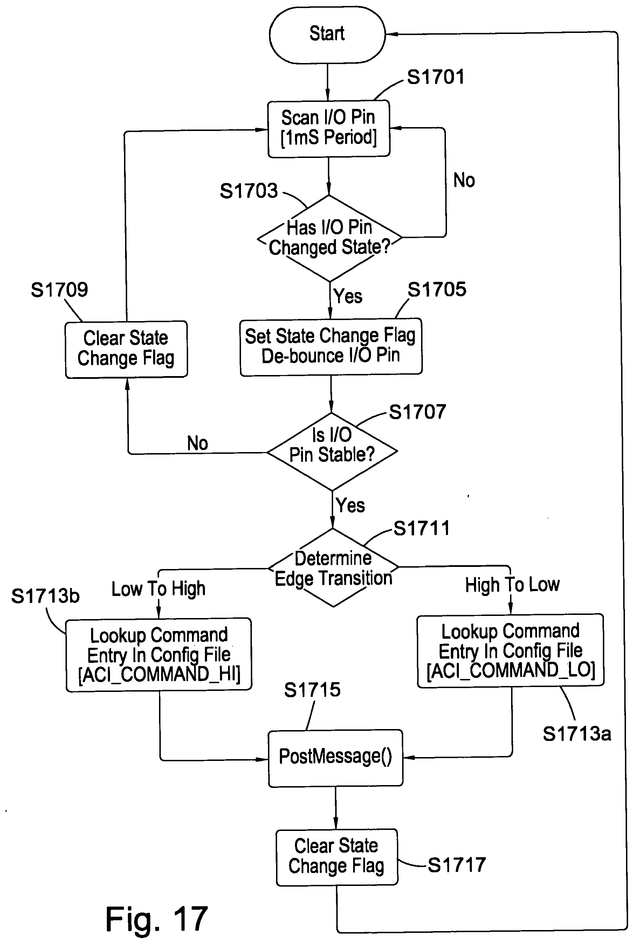

Figure 17 shows a flow chart summarising the steps used to map the voltage signal received at the pin in Figure 16 to an appropriate ACI message frame. The voltage on the pin is checked at intervals of e.g. 1 ms (Step S1701). Each time, a determination is made as to whether the pin has changed state i.e. whether or not the voltage has switched from an upper value to a lower value, or vice versa (Step S1703). In the event that the pin has changed state, the interface unit sets a State Change Flag and performs de-bouncing of the signal (Step S1705) to determine if the change in state is real, or simply a noise artefact (Step S1707). If the pin is deemed to be unstable, the State Change Flag is cleared (Step S1709); otherwise, the interface unit determines whether the change in voltage is from low to high, or high to low (Step S1711). The interface unit next looks up the relevant ACI message frame in the configuration file (Steps S1713a, 1713b) and posts the appropriate ACI message frame within an IPC message to the relevant destination (Step S1715). The State Change Flag is then cleared once more (Step S1717).

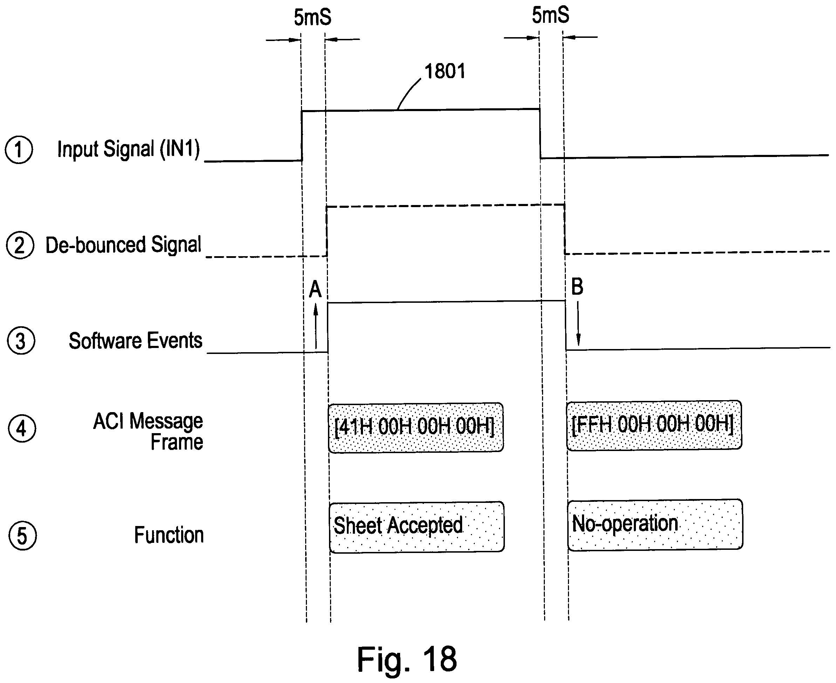

It will be understood that some signals may only have meaning on one or other of the rising or falling edge of the signal. This situation is shown in Figure 18. Here, the trailing edge of the input signal 1801 is not used to denote a particular function of the printing engine or peripheral device; instead, the trailing edge may be mapped to a no-operation ('NOP') message of the form [FFH xxH xxH xxH], for example.

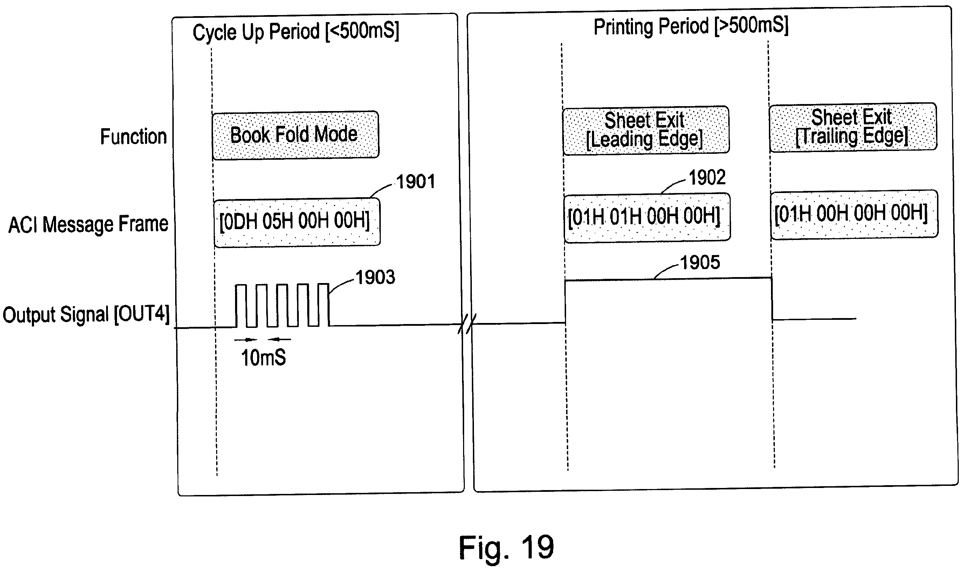

Figure 19 shows an example of a case in which the interface unit maps ACI message frames to voltage signals at one of the pins of the parallel port for output to the peripheral device. In this example, two different ACI message frames 1901, 1902 can be mapped to the same output pin OUT4, to result in two different output voltage signals 1903, 1905, respectively. The first output voltage signal 1903 comprises a series of pulses, which in the present example have 10ms separation; the second output voltage signal 1905 comprises a single pulse of longer duration. The first output voltage signal 1903 is interpreted by the peripheral device as a request to enter "Book Fold" mode. The second output voltage signal 1905 indicates that the peripheral device should expect to receive the leading edge of a piece of paper, or other media, leaving the printing engine.

The interface unit can choose to map either one of the ACI message frames 1901, 1902 to the output pin. Precisely which one of the two message frames is chosen will depend on the present status of the printing engine and / or peripheral device. The current status may be determined by reference to an earlier received signal from on or other of the printing engine and the peripheral device. The printing engine may issue a status signal via its serial port to the interface unit, indicating that the printing engine is commencing a period of a specified duration, such as a "Cycle Up" period, for example. The status signal will be abstracted to an ACI message frame within the interface unit, with the duration of the Cycle Up period being encoded as a timing parameter within that ACI message frame. At a subsequent point in time, the interface unit may receive a command signal from the printing engine. The command signal will be abstracted to one of the two ACI message frames 1901, 1902, which will in turn be mapped to one of the respective voltage signals 1903, 1905. The interface unit will select one or other of those message frames 1901, 1902 by determining whether the timing period specified in the earlier status signal has elapsed or not. If the timing period as expired, the interface unit is able to determine that the Cycle Up period is complete and that a second period (e.g. a Printing Period) has begun.

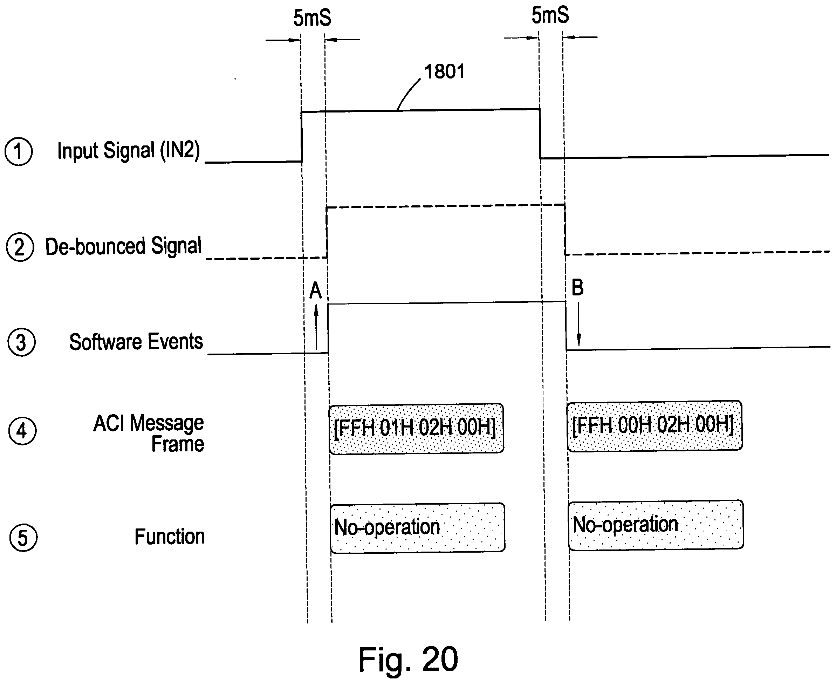

If an input signal is unused or not required it can have 'NOP' ACI message frames applied to both its rising and falling edges; this situation is shown in Figure 20. Optional data in the message can be used to track the signals behaviour even though it has no function. The ability to assign data to a NOP command allows for input pins to be tracked, which can be useful in debugging the system.

While certain embodiments have been described, these embodiments have been presented by way of example only, and are not intended to limit the scope of the invention as claimed.

## Claims

1. An interface unit (207, 307, 407, 507, 601) for connecting a printing engine to a peripheral device, the interface unit comprising:
a port (507, 607) for receiving a connector having a plurality of electrical connecting members used to transmit signals from a first one of the printing engine and the peripheral device to the other of the printing engine and the peripheral device; and
a mapping engine (613) for mapping voltage signals received at respective ones of the electrical connecting members to predetermined message frames, wherein a message frame comprises a sequence of bits that conveys information concerning the status or actions of the first one of the printing engine and the peripheral device;
the interface unit (207, 307, 407, 507, 601) being configured to use each message frame to output a corresponding signal to other of the printing engine and the peripheral device.

2. An interface unit (207, 307, 407, 507, 601) according to claim 1, wherein the connecting members are pin members.

3. An interface unit (207, 307, 407, 507, 601) according to claim 1 or 2, wherein the interface unit is configured to use each message frame to generate a corresponding serial command and transmit the serial command to the other of the printing engine and the peripheral device.

4. An interface unit (207, 307, 407, 507, 601) according to any one of claims 1 to 3, wherein the mapping engine (613) is further configured to map data commands received from the first one of the printing engine and the peripheral device to voltage signals and to apply the voltage signals to the respective electrical connecting members for output to the other of the printing engine and the peripheral device.

5. An interface unit (207, 307, 407, 507, 601) according to any one of claims 1 to 4, wherein each predetermined message frame is associated with a change in voltage at a respective electrical connecting member.

6. An interface unit (207, 307, 407, 507, 601) according to claim 5, wherein the sequence of bits in a message frame encodes one or more timing parameters.

7. An interface unit (207, 307, 407, 507, 601) according to any one of the preceding claims, wherein the mapping between the predetermined message frames and the respective electrical connecting members is stored in a configuration file (903), the interface unit being configured to access the configuration file to determine a message frame to be generated on detecting a voltage signal at a respective electrical connecting member.

8. An interface unit (207, 307, 407, 507, 601) according to any one of the preceding claims, wherein the interface unit is configured to generate one of the predetermined message frames on detecting the rising and / or falling edge of a voltage signal at a respective electrical connecting member.

9. An interface unit (207, 307, 407, 507, 601) according to claim 8, wherein on detecting the rising edge of a voltage signal at a respective electrical connecting member, the interface unit is configured to generate a first message frame and on detecting the falling edge of the voltage signal, the interface unit is configured to generate a second message frame.

10. An interface unit (207, 307, 407, 507, 601) according to any one of the preceding claims, wherein the interface unit is configured to perform a step of debouncing a voltage signal detected at a respective electrical connecting member, before determining whether to map the voltage signal to one of the predetermined message frames.

11. An interface unit (207, 307, 407, 507, 601) according to any one of the preceding claims, comprising a message queue for queuing message frames generated by the unit, wherein the message frames are stored in the queue in the order in which they are generated.

12. An interface unit (207, 307, 407, 507, 601) according to any one of the preceding claims, wherein the peripheral device is configured to perform one or more of: stapling, binding, punching and folding printed media;
or wherein the peripheral device is configured to feed media for printing on into the printing engine.

13. A system comprising:
an interface unit (207, 307, 407, 507, 601) according to any one of the preceding claims; and
a printing engine or a peripheral device.

14. A method for interfacing a printing engine to a peripheral device, the method comprising:
detecting voltage signals at respective electrical connecting members of a connector used to transmit signals from a first one of the printing engine and the peripheral device to the other of the printing engine and the peripheral device;
mapping the voltage signals received at the respective electrical connecting members to predetermined message frames, wherein a message frame comprises a sequence of bits that conveys information concerning the status or actions of the first one of the printing engine and the peripheral device; and
using each message frame to output a corresponding signal to other of the printing engine and the peripheral device..

15. A computer readable storage medium comprising computer executable instructions that when executed by a computer will cause the computer to carry out the method of claim 14.

## Patentansprüche

1. Schnittstelleneinheit (207, 307, 407, 507, 601) zum Verbinden einer Druckmaschine an eine periphere Vorrichtung, wobei die Schnittstelleneinheit Folgendes umfasst:
einen Port (507, 607) zum Aufnehmen eines Verbinders mit einer Vielzahl von elektrischen Verbindungsgliedern, die zum Übertragen von Signalen von einer ersten der Druckmaschine und der peripheren Vorrichtung an die andere der Druckmaschine und der peripheren Vorrichtung verwendet wird; und
eine Abbildungsmaschine (613) zum Abbilden von Spannungssignalen, die an jeweiligen der elektrischen Verbindungsglieder empfangen werden, auf vorgegebene Nachrichtenrahmen, worin ein Nachrichtenrahmen eine Sequenz von Bits umfasst, die Information befördert, die den Status oder Aktionen der ersten der Druckmaschine und der peripheren Vorrichtung betrifft;
wobei die Schnittstelleneinheit (207, 307, 407, 507, 601) dazu konfiguriert ist, jeden Nachrichtenrahmen dazu zu verwenden, ein entsprechendes Signal an die andere der Druckmaschine und der peripheren Vorrichtung auszugeben.

2. Schnittstelleneinheit (207, 307, 407, 507, 601) nach Anspruch 1, worin die Verbindungsglieder Stiftglieder sind.

3. Schnittstelleneinheit (207, 307, 407, 507, 601) nach Anspruch 1 oder 2, worin die Schnittstelleneinheit dazu konfiguriert ist, jeden Nachrichtenrahmen dazu zu verwenden, einen entsprechenden seriellen Befehl zu erzeugen und den seriellen Befehl an die andere der Druckmaschine und der peripheren Vorrichtung zu übertragen.

4. Schnittstelleneinheit (207, 307, 407, 507, 601) nach einem der Ansprüche 1 bis 3, worin die Abbildungsmaschine (613) außerdem dazu konfiguriert ist, Datenbefehle, die von der ersten der Druckmaschine und der peripheren Vorrichtung empfangen werden, auf Spannungssignale abzubilden und die Spannungssignale an jeweilige elektrische Verbindungsglieder zur Ausgabe an die andere der Druckmaschine und der peripheren Vorrichtung anzulegen.

5. Schnittstelleneinheit (207, 307, 407, 507, 601) nach einem der Ansprüche 1 bis 4, worin jeder vorgegebene Nachrichtenrahmen mit einer Änderung in der Spannung an einem jeweiligen elektrischen Verbindungsglied assoziiert ist.

6. Schnittstelleneinheit (207, 307, 407, 507, 601) nach Anspruch 5, worin die Sequenz von Bits in einem Nachrichtenrahmen einen oder mehrere Timing-Parameter codiert.

7. Schnittstelleneinheit (207, 307, 407, 507, 601) nach einem der vorhergehenden Ansprüche, worin die Abbildung zwischen den vorgegebenen Nachrichtenrahmen und den jeweiligen elektrischen Verbindungsgliedern in einer Konfigurationsdatei (903) gespeichert ist, wobei die Schnittstelleneinheit dazu konfiguriert ist, auf die Konfigurationsdatei zuzugreifen, um einen Nachrichtenrahmen zu bestimmen, der nach Detektieren eines Spannungssignals an einem jeweiligen elektrischen Verbindungsglied zu erzeugen ist.

8. Schnittstelleneinheit (207, 307, 407, 507, 601) nach einem der vorhergehenden Ansprüche, worin die Schnittstelleneinheit dazu konfiguriert ist, einen der vorgegebenen Nachrichtenrahmen nach Detektieren der steigenden und/oder fallenden Flanke eines Spannungssignals an einem jeweiligen elektrischen Verbindungsglied zu erzeugen.

9. Schnittstelleneinheit (207, 307, 407, 507, 601) nach Anspruch 8, worin nach Detektieren der steigenden Flanke eines Spannungssignals an einem jeweiligen elektrischen Verbindungsglied die Schnittstelleneinheit dazu konfiguriert ist, einen ersten Nachrichtenrahmen zu erzeugen, und nach Detektieren der fallenden Flanke des Spannungssignals die Schnittstelleneinheit dazu konfiguriert ist, einen zweiten Nachrichtenrahmen zu erzeugen.

10. Schnittstelleneinheit (207, 307, 407, 507, 601) nach einem der vorhergehenden Ansprüche, worin die Schnittstelleneinheit dazu konfiguriert ist, einen Schritt des Entprellens eines Spannungssignals auszuführen, das an einem jeweiligen elektrischen Verbindungsglied detektiert wird, bevor bestimmt wird, ob das Spannungssignal auf einen der vorgegebenen Nachrichtenrahmen abzubilden ist.

11. Schnittstelleneinheit (207, 307, 407, 507, 601) nach einem der vorhergehenden Ansprüche, eine Nachrichtenwarteschlange umfassend, um Nachrichtenrahmen, die von der Einheit erzeugt werden, in die Warteschlange einzureihen, worin die Nachrichtenrahmen in der Reihenfolge in die Warteschlange eingereiht werden, in der sie erzeugt werden.

12. Schnittstelleneinheit (207, 307, 407, 507, 601) nach einem der vorhergehenden Ansprüche, worin die periphere Vorrichtung dazu konfiguriert ist, eins oder mehrere von Folgenden auszuführen: das Heften, Binden, Lochen und Falten von gedruckten Medien;
oder worin die periphere Vorrichtung dazu konfiguriert ist, Medien, auf die gedruckt wird, in die Druckmaschine einzuspeisen.

13. System, Folgendes umfassend:
eine Schnittstelleneinheit (207, 307, 407, 507, 601) nach einem der vorhergehenden Ansprüche; und
eine Druckmaschine oder eine periphere Vorrichtung.

14. Verfahren, um eine Druckmaschine an eine periphere Vorrichtung kompatibel anzuschließen, wobei das Verfahren Folgendes umfasst:
Detektieren von Spannungssignalen an jeweiligen elektrischen Verbindungsgliedern eines Verbinders, der verwendet wird, um Signale von einer ersten der Druckmaschine und der peripheren Vorrichtung an die andere der Druckmaschine und der peripheren Vorrichtung zu übertragen;
Abbilden der Spannungssignale, die an den jeweiligen elektrischen Verbindungsgliedern empfangen werden, auf vorgegebene Nachrichtenrahmen, worin ein Nachrichtenrahmen eine Sequenz von Bits umfasst, die Information befördert, die den Status oder Aktionen der ersten der Druckmaschine und der peripheren Vorrichtung betrifft; und
Verwenden eines jeden Nachrichtenrahmens, um ein entsprechendes Signal an die andere der Druckmaschine und der peripheren Vorrichtung auszugeben.

15. Computerlesbares Speichermedium, computerausführbare Anweisungen umfassend, die, wenn sie von einem Computer ausgeführt werden, den Computer veranlassen, das Verfahren nach Anspruch 14 auszuführen.

## Revendications

1. Unité d'interface (207, 307, 407, 507, 601) destinée à relier un moteur d'impression à un dispositif périphérique, l'unité d'interface comprenant :
un port (507, 607) destiné à recevoir un connecteur présentant une pluralité d'éléments de connexion électrique utilisés en vue de transmettre des signaux, d'un premier parmi le moteur d'impression et le dispositif périphérique à l'autre parmi le moteur d'impression et le dispositif périphérique ; et
un moteur de mise en correspondance (613) destiné à mettre en correspondance des signaux de tension, reçus au niveau d'éléments respectifs des éléments de connexion électrique, avec des trames de messages prédéterminées, dans laquelle une trame de message comprend une séquence de bits qui achemine des informations concernant l'état ou les actions du premier parmi le moteur d'impression et le dispositif périphérique ;
l'unité d'interface (207, 307, 407, 507, 601) étant configurée de manière à utiliser chaque trame de message en vue de délivrer en sortie un signal correspondant à l'autre parmi le moteur d'impression et le dispositif périphérique.

2. Unité d'interface (207, 307, 407, 507, 601) selon la revendication 1, dans laquelle les éléments de connexion sont des éléments de broche.

3. Unité d'interface (207, 307, 407, 507, 601) selon la revendication 1 ou 2, dans laquelle l'unité d'interface est configurée de manière à utiliser chaque trame de message en vue de générer une commande sérielle correspondante et de transmettre la commande sérielle à l'autre parmi le moteur d'impression et le dispositif périphérique.

4. Unité d'interface (207, 307, 407, 507, 601) selon l'une quelconque des revendications 1 à 3, dans laquelle le moteur de mise en correspondance (613) est en outre configuré de manière à mettre en correspondance des commandes de données, reçues en provenance du premier parmi le moteur d'impression et le dispositif périphérique, avec des signaux de tension, et à appliquer les signaux de tension aux éléments de connexion électrique respectifs à des fins de délivrance en sortie à l'autre parmi le moteur d'impression et le dispositif périphérique.

5. Unité d'interface (207, 307, 407, 507, 601) selon l'une quelconque des revendications 1 à 4, dans laquelle chaque trame de message prédéterminée est associée à une modification de tension au niveau d'un élément de connexion électrique respectif.

6. Unité d'interface (207, 307, 407, 507, 601) selon la revendication 5, dans laquelle la séquence de bits dans une trame de message code un ou plusieurs paramètres de temporisation.

7. Unité d'interface (207, 307, 407, 507, 601) selon l'une quelconque des revendications précédentes, dans laquelle la mise en correspondance entre les trames de messages prédéterminées et les éléments de connexion électrique respectifs est stockée dans un fichier de configuration (903), l'unité d'interface étant configurée de manière à accéder au fichier de configuration en vue de déterminer une trame de message devant être générée suite à la détection d'un signal de tension au niveau d'un élément de connexion électrique respectif.

8. Unité d'interface (207, 307, 407, 507, 601) selon l'une quelconque des revendications précédentes, dans laquelle l'unité d'interface est configurée de manière à générer l'une des trames de messages prédéterminées suite à la détection du front montant et/ou du front descendant d'un signal de tension au niveau d'un élément de connexion électrique respectif.

9. Unité d'interface (207, 307, 407, 507, 601) selon la revendication 8, dans laquelle, suite à la détection du front montant d'un signal de tension au niveau d'un élément de connexion électrique respectif, l'unité d'interface est configurée de manière à générer une première trame de message, et suite à la détection du front descendant du signal de tension, l'unité d'interface est configurée de manière à générer une seconde trame de message.

10. Unité d'interface (207, 307, 407, 507, 601) selon l'une quelconque des revendications précédentes, dans laquelle l'unité d'interface est configurée de manière à exécuter une étape d'élimination des rebonds d'un signal de tension détecté au niveau d'un élément de connexion électrique respectif, avant de déterminer s'il convient de mettre en correspondance le signal de tension avec l'une des trames de messages prédéterminées.

11. Unité d'interface (207, 307, 407, 507, 601) selon l'une quelconque des revendications précédentes, comprenant une file d'attente de messages destinée à mettre en file d'attente des trames de messages générées par l'unité, dans laquelle les trames de messages sont stockées dans la file d'attente dans l'ordre dans lequel elles sont générées.

12. Unité d'interface (207, 307, 407, 507, 601) selon l'une quelconque des revendications précédentes, dans laquelle le dispositif périphérique est configuré de manière à mettre en oeuvre une ou plusieurs des étapes ci-après : un agrafage, une reliure, un poinçonnage et un pliage de supports imprimés ;
ou dans laquelle le dispositif périphérique est configuré de manière à introduire des supports à des fins d'impression sur ces derniers dans le moteur d'impression.

13. Système comprenant :
une unité d'interface (207, 307, 407, 507, 601) selon l'une quelconque des revendications précédentes ; et
un moteur d'impression ou un dispositif périphérique.

14. Procédé d'interfaçage d'un moteur d'impression avec un dispositif périphérique, le procédé comprenant les étapes ci-dessous consistant à :
détecter des signaux de tension au niveau d'éléments de connexion électrique respectifs d'un connecteur utilisé en vue de transmettre des signaux, d'un premier parmi le moteur d'impression et le dispositif périphérique à l'autre parmi le moteur d'impression et le dispositif périphérique ;
mettre en correspondance les signaux de tension, reçus au niveau des éléments de connexion électrique respectifs, avec des trames de messages prédéterminées, dans lequel une trame de message comprend une séquence de bits qui achemine des informations concernant l'état ou les actions du premier parmi le moteur d'impression et le dispositif périphérique ; et
utiliser chaque trame de message en vue de délivrer en sortie un signal correspondant à l'autre parmi le moteur d'impression et le dispositif périphérique.

15. Support de stockage lisible par ordinateur comprenant des instructions exécutables par ordinateur qui, lorsqu'elles sont exécutées par un ordinateur, amèneront l'ordinateur à mettre en oeuvre le procédé selon la revendication 14.
